# EUROPEAN PATENT APPLICATION

(11) **EP 4 563 251 A1**
(43) Date of publication of application: **04.06.2025**
(21) Application number: 23213618.4
(22) Date of filing: 01.12.2023
(51) Int. Cl.: B08B 7/02, B06B 3/04, B08B 13/00, B60S 1/02

(54) **SYSTEM FOR CLEANING A SURFACE BY FORMING AN ULTRASOUND BEAM**

(71) Applicant: Valeo Systèmes d'Essuyage, 78321 Le Mesnil Saint Denis (FR)
(72) Inventor: BARAKAT, Basem, 12577 Cairo (EG)
(74) Representative: Valeo Visibility

(57) **Abstract**

Method for cleaning a surface (101) on which an array (102) of piezoelectric transducers (110) is mounted, each transducer (110) being arranged to receive a control signal and to convert it into an individual ultrasound wave transported on the surface, the method comprising the following steps:
- determining (401) a target position and/or a target direction on the surface;
- generating (402) a series of control signals based on the determined target position and/or target direction, so that individual ultrasound waves (G) generated by the array (102) of piezoelectric transducers (110) based on the series of control signals, combine into an ultrasound beam that is focused on the target position and/or that is steered in the target direction;
- transmitting (403) the series of control signals to the array (102) of transducers (110).

## Description

The present invention relates to the cleaning of a surface using pulsed ultrasound waves, in particular for cleaning optical surfaces of a vehicle.

In various fields, it is necessary to avoid accumulating bodies, such as rain drops, snow or dust particles, on a surface, to maintain the surface clean. In addition, when the surface is an optical surface, the cleaning of the surface allows to increase the visibility of a sensor or of a user looking through the surface.

For example, in a vehicle, it is necessary to remove bodies from optical surfaces such as the windshield through which the driver of the vehicle is observing the scene in front of the vehicle, or such as the optical surface of a sensor, camera or radar for example. Therefore, maintaining clean an optical surface of a vehicle is critical, as accumulation of varied bodies on the optical surface can raise security issues.

Various systems are known to clean surfaces such as the windshield of a vehicle. For example, mechanical wipers are installed on the windshield of many vehicles to sweep across the windshield and remove bodies such as rain water, dirt and debris using physical contact with the bodies. Some cleaning systems also make use of water jets or spays that can wash away dirt and debris using liquid pressure.

Other known cleaning systems employ heating elements or defrosters that can melt or evaporate ice or snow from the windshield of a vehicle, using thermal energy.

However, all these cleaning systems lack accuracy in that they are not able to focus the cleaning on a specific position or direction of the surface to be cleaned. Also, the known cleaning systems are not efficient on all kinds of bodies to be evacuated from the surface. In addition, mechanical systems used on optical surfaces deteriorate the visibility of a user or of a sensor.

There is therefore a need for efficiently cleaning a surface, to evacuate a broad scope of body types from the surface, while allowing to focus the cleaning on a specific portion, position or direction of the surface.

A first aspect of the invention concerns a method for cleaning a surface on which an array of piezoelectric transducers is mounted, each transducer being arranged to receive a control signal and to convert it into an individual ultrasound wave transported on the surface, the method comprising the following steps:
- determining a target position and/or a target direction on the surface;
- generating a series of control signals based on the determined target position and/or target direction, so that individual ultrasound waves generated by the array of piezoelectric transducers based on the series of control signals, combine into an ultrasound beam that is focused on the target position and/or that is steered in the target direction;
- transmitting the series of control signals to the array of transducers.

The method allows to target a specific position or direction when cleaning a surface, using a beamforming technique. The efficiency and precision associated with the cleaning of the surface is therefore improved. In addition, an ultrasound beam does not deteriorate the surface and does not deteriorate the visibility of a sensor or user, when the surface is an optical surface.

According to some embodiments, the target position and/or target direction may be determined based on a picture acquired from a camera arranged to acquire pictures representative of the surface.

This allows to target a body to be evacuated from the surface, identified in the picture at the target position or in the target direction. The cleaning of the surface is therefore improved, as the cleaning is focused on the body to be evacuated and not on the whole surface.

According to some alternative embodiments, the method may further comprise, before determining the target position and/or a target direction, the steps of:
- determining a sequence of positions and/or directions of the surface;
- for each position and/or direction of the sequence, generating a series of control signals based on the position and/or direction of the sequence, so that individual ultrasound waves generated by the array of piezoelectric transducers based on the series of control signals, combine into an ultrasound beam that is focused on the and/or that is steered in the direction of the sequence, transmitting the series of control signals and receiving a series of echo signals from the array of transducers;
- generating an ultrasound image based on the several series of echo signals received for the positions and/or directions of the sequence.

The target position and/or target direction may be determined based on the generated ultrasound image.

This allows to target a body to be evacuated from the surface, identified in the ultrasound image at the target position or in the target direction, without the need for an additional sensor such as a camera. The cleaning of the surface is therefore improved, as the cleaning is focused on the body to be evacuated and not on the whole surface. Generation of the ultrasound image may be performed based on beamforming, for example based on synthetic aperture beamforming.

According to some embodiments, the method further comprises determining a weather condition, and parameters of the series of control signals may be determined based on the target position and/or a target direction and based on the weather condition.

This enables to improve the cleaning of the surface, as the generated ultrasound beam can be adapted/optimized based on the detected weather condition. This also allows the cleaning to be efficient for a broad scope of body types to be evacuated, which can depend on the weather conditions.

According to some of the embodiments, the weather condition may be determined based on the picture acquired by the camera.

This allows to automatically determine the weather condition. The weather condition may also be updated by receiving the picture acquired by the camera at a given frequency.

According to the alternative embodiments, the weather condition may be determined based on the ultrasound image.

This allows to automatically determine the weather condition, without the need of an additional sensor such as a camera.

Still in complement, the weather condition may be a weather category determined among a plurality of predefined weather category by applying a classification model.

This allows to have predefined parameters of control signals for the different possible weather categories.

Still in complement, the classification model may be a convolutional neural network.

The convolutional neural network allows an accurate determination of the weather category. In addition, a convolutional neural network is particularly fitted for processing an image such as an ultrasound image.

A second aspect of the invention concerns a computer program comprising instructions arranged for implementing the method according to the first aspect of the invention, when said instructions are executed by a processor.

A third aspect of the invention concerns a control device of a system for cleaning a surface on which an array of piezoelectric transducers is mounted, each transducer being arranged to receive a control signal and to convert it into an individual ultrasound wave transported on the surface, the control device comprising a control module with a processor configured for:
- determining a target position and/or a target direction on the surface;
- generating a series of control signals based on the determined target position and/or target direction, so that individual ultrasound waves generated by the array of piezoelectric transducers based on the series of control signals, combine into an ultrasound beam that is focused on the target position and/or that is steered in the target direction.

The control device may further comprise a transmission interface arranged for transmitting the series of control signals to the array of transducers.

A fourth aspect of the invention concerns a system for cleaning a surface, comprising a control device according to the third aspect of the invention and an array of piezoelectric transducers, each transducer being arranged to receive a control signal and to convert it into an individual ultrasound wave transported on the surface.

### Brief description of the drawings:

[fig 1a] shows a system for cleaning a surface according to some embodiments of the invention ;
[fig 1b] a piezoelectric transducer of a system for cleaning a surface according to some embodiments of the invention;
[fig 2] shows a control device for controlling an array of transducers of a system for cleaning a surface, according to some embodiments of the invention;
[fig 3a] shows an array of transducers of a system for cleaning a surface according to some embodiments of the invention, in a first configuration;
[fig 3b] shows an array of transducers of a system for cleaning a surface according to some embodiments of the invention, in a second configuration;
[fig 4] shows the steps of a method for controlling an array of transducers of a cleaning system according to some embodiments of the invention ;
[fig 5] shows some preliminary steps of a method for controlling an array of transducers of a cleaning system according to some embodiments of the invention ;
[fig 6] shows a convolutional neuronal network for determining a weather category based on an ultrasound image received as input, implemented in a system for cleaning a surface according to some embodiments of the invention .

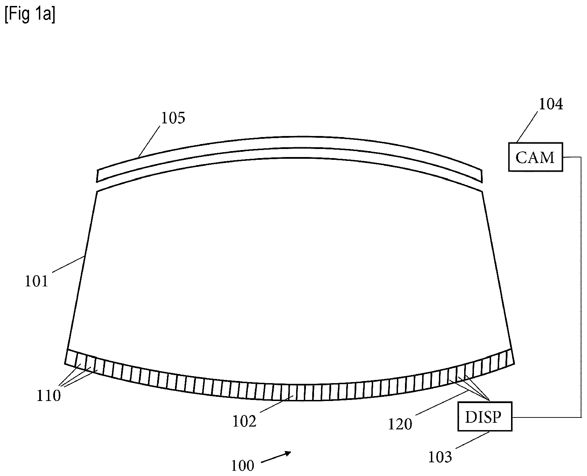

Figure 1a shows a system 100 for cleaning a surface 101 according to some embodiments of the invention.

No restriction is attached to the surface 101, which can be any surface that is flat or curved, but preferably with a high radius of curvature. The surface may be part of a larger equipment, comprising components other than the surface 101. No restriction is attached to the material of the surface 101, which can be glass for example. According to some embodiments, the surface 101 is an optical surface, which is at least party transparent, and preferably with a transparency coefficient higher than 90%. For example, the surface 101 may be an optical surface of a sensor, or may be the windshield of a vehicle.

In what follows, it is considered, for illustrative purposes only, that the surface 101 is a windshield arranged to be mounted on a vehicle. Therefore, the surface 101 may have a width comprises between 1.2 meter and 2 meter, for example equal to 1.5 meter, and may have a height comprised between 0.4 and 0.7 meter, for example equal to 0.5 meter. The windshield 101 may be made of glass.

Figure 1a shows a front view of the surface 101, representing the two main dimensions of the surface 101, including the width according along the X axis and the height along the Y axis. The third dimension of the surface 101, which is the thickness of the surface 101, is along the Z axis and may be smaller than each of the two other dimensions, for example at least 10 times smaller than each of the two other dimensions shown in figure 1a.

The cleaning system 100 comprises a control device 103 and an array 102 of piezoelectric transducers 110 mounted on the surface 101, in particular on along a first side of the surface 101 extending along the X direction, which can be a horizontal direction when the surface 101 is a windshield mounted in a vehicle, whereas the Y direction may form an angle with a horizontal plane, the angle being not null, for example comprised between 30 and 60°.

Preferably, the array 102 has the same size in the X direction as the surface 101, or has a size in the X direction that is at least equal to 90% of the width of the surface 101.

The control device 103 is arranged for controlling each transducer 110 of the array 102, via communication wires 120. To this end the control device 103 may transmit control signals to the respective transducers 110 via the communication wires 120. The control signals may be electrical pulses defined by their delays/phase (defining the instant at which they reach the transducer and activate it) and by their magnitude and/or by their duration. Upon reception of a control signal, such as an electrical pulse, each of the transducers is arranged to generate an ultrasound wave that depends on the parameters of the control signal, such as delay, magnitude and duration. Each transducer 110 is therefore arranged to convert electrical energy into sound energy.

By controlling the transducers of the array 102 together, the control device 103 is arranged to control characteristics of an ultrasound beam formed by the combination of the individual ultrasound waves generated by the transducers 110. The characteristics of the ultrasound beam that are controlled by the control device 103 may be:
- a position of a focal point of the beam, in case of the generation of a focused beam having a focused pattern; or
- the direction of the beam, in case of the generation of a steered beam having a steered pattern.

The control device 103 may also combine steering and focusing the beam to be able to displace the focal point of the beam at each position in X and Y of the surface 101.

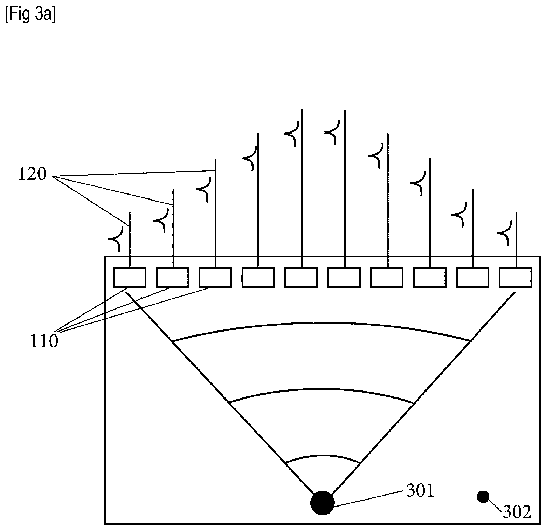

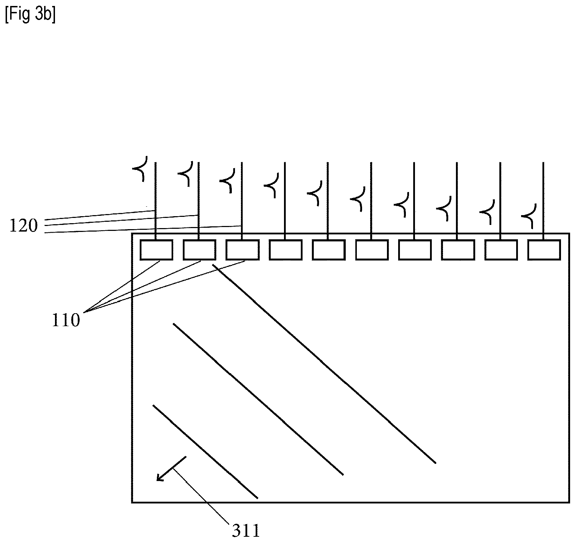

Examples of beam focusing and beam steering are shown on Figures 3a and 3b, described hereafter.

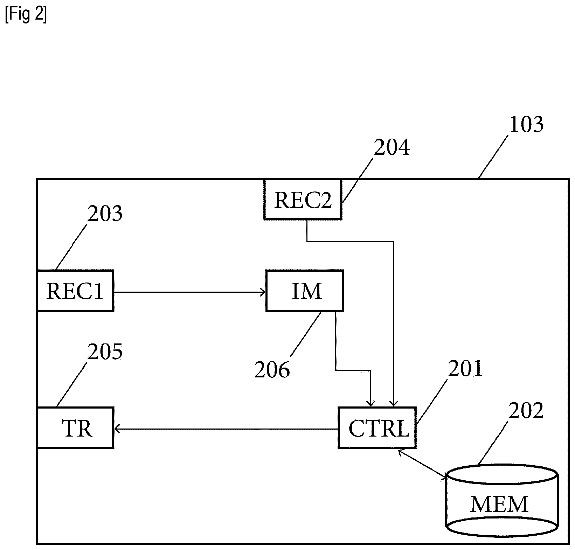

An individual transducer 110 of the array 102 is shown on figure 2.

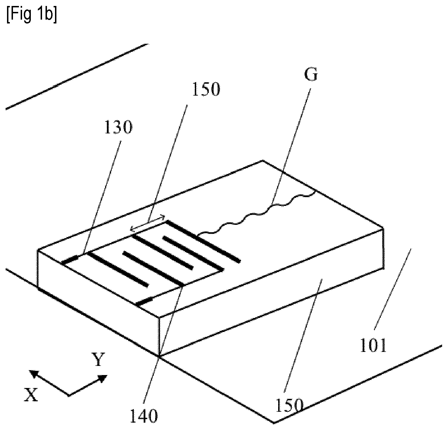

The individual transducer 110 may comprise a first electrode 130 and a second electrode 140, mounted on a piezoelectric substrate 150 of the transducer 110. On figure 1b, the substrate 150 is comprised between the electrodes 130 and 140 and the surface 101. However, alternatively, the electrodes 130 and 140 are comprised between the substrate 150 and the surface 100.

The substrate 110 is a piezoelectric element, comprising for example a piezoelectric material such as lithium niobate. The substrate can have a sheet shape, with a thickness being lower than, or equal to, 500 micrometers.

The first and second electrodes 130 and 150 are arranged to receive the control signal from the control device 103 and to generate an ultrasound wave G that is transported on the surface 101. It is to be noted that, in practice, the ultrasound wave G does not have a single direction as shown on Figure 1b, but is transmitted in a given range of angles, which allows ultrasound waves of different transducers 110 to be combined to form the ultrasound beam.

As shown on Figure 1b, first and second electrodes 130 and 140 may have a comb shape. However, no restriction is attached to the shape of the first and second electrodes 130 and 140.

Each comb comprises a base and a range of fingers parallel extending from the base. Also, the positions of the fingers may be alternated between the first and second electrodes 130 and 140, as shown on figure 1b.

Each of the fingers of the first electrode 130 and of the second electrode 140 may have a width (dimension in the Y direction) that is equal to the fundamental wavelength of the ultrasound wave divided by 4, and a spacing 190 between two consecutive fingers of a same electrode determines the resonance frequency of the transducer 110.

The ultrasound wave G generated by the transducer 110 may have an amplitude that is lower than 500 nanometers, nm, in particular lower than 100 nm, and even lower than 10 nm.

The transducer array 102 may be glued on the surface 101, using a polymeric adhesive that is arranged to acoustically couple the transducer array 102 to the surface 101.

The adhesive may be crosslinkable using ultraviolet radiation. It is for example an epoxy resin. The transducer can be fixed by molecular adhesion or by means of a thin metallic layer ensuring adhesion between the surface 101 and the substrate 150 of each transducer 110. The layer can be made of metal or an alloy with a low melting temperature, for example with a melting temperature lower than 200°C, such as an indium alloy. Alternatively, the metallic layer may comprise a metal or an alloy with a melting temperature higher than 200°C, for example an aluminum alloy and/or a gold alloy. An example of fixation by molecular adhesion is described in the document *« Glass-on-LiNbO₃ heterostructure formed via a two-step plasma activated low-temperature direct bonding method* », J. Xu et al., Applied Surface Science 459 (2018) 621-629, doi : 10.1016/j.apsusc.2018.08.031.

According to another alternative, the transducer array 110 may be fixed on the surface 101 using a process comprising a step of melting a portion of each substrate 150 and/or a portion of the surface 101, the respective portions being in contact. According to still another alternative, the array 102 may be fixed on the surface 101 using a process comprising a deposition of bonding layers in an alloy with a low melting temperature, on a portion of each transducer 110 and on a portion of the surface 101 respectively, the at least partial fusion of the bonding layers, and the compression of the substrates 150 and the surface 101, wherein the faces of the bonding layers that are opposite to the surface 101 and to the substrates 150 are put in contact with each other during compression.

In what follows, some features of the transducer array 102 are described for illustrative purposes.

The frequency range of the generated ultrasound waves may vary between 20 kHz and 400 kHz, which is optimal for using for cleaning applications, to form an ultrasound beam with cavitation bubbles to dislodge bodies, such as dirt or debris, or to melt snow, without damaging the surface 101 or other components of an equipment comprising the surface 101.

A linear array 102 is shown on figure 2, which is preferable to provide a high resolution for focusing on positions varying in the horizontal direction along the X axis, which is particularly advantageous when the surface 101 is a vehicle windshield. A linear array 102 requires less transducers and control channels than a ring array, which can reduce the costs and complexity of the cleaning system 100.

The transducer pitch may be less than 1 millimeter, for example comprised between 0.3 mm and 0.7 mm, in particular equal to 0.5 mm. The pitch is the space between the respective centers of two consecutive transducers in the array. A pitch that is comprised between 0.3 mm and 0.7 mm is advantageous because it is less than half of the wavelength of the ultrasound waves, and avoids spatial aliasing. Such pitch value allows a resolution of about 1 mm for the beam focusing along the horizontal direction (X axis).

The array 102 comprises a number N of transducers. The number of transducers may be chosen based on the width of the surface 101 and the transducer pitch. In the example of a surface 101 being a vehicle windshield, having a width of about 1.5 meter, if the pitch is comprised between 0.3 mm and 0.7 mm, the array 102 may comprise between 2000 and 5000 transducers, in particular 3000 transducers. This high number allows to improve the resolution of the focusing point that can be targeted by the ultrasound beam, and also the resolution of the ultrasound image generated based on the echo of the ultrasound beam, as explained in what follows. This high number also leads to a high number of communication wires 120, which can be reduced using multiplexing or subaperture processing.

For smaller surfaces 100, the pitch and/or the number N of transducers can be reduced accordingly.

No restriction is attached to the shape of the transducers 110, which can be rectangular for example. The width (dimension in the X direction) of the transducers is necessarily smaller than or equal to the pitch. Preferably, the width of each transducer 110 is equal to the pitch, for example 0.5 mm, so as to avoid gaps between the transducers 110. The length (dimension in the Y direction) of the transducers 110 may be comprised between 5 and 15 mm, for example equal to 10 mm. Such a length allows a sufficient sensitivity and directivity of the ultrasound waves. Complementary techniques may be used in the transducers to improve the directivity, such as apodization or shading.

The above mentioned resonance frequency, determined by the space between the fingers of the electrodes of each transducer, may by comprised between 100 and 120 kHz, for example equal to 110 kHz, which is close to or slightly higher than the operating frequency of the cleaning system 100. Such a resonance frequency value ensures that the transducers 110 vibrate efficiently and generate strong ultrasound waves at the desired frequency.

The bandwidth of the communication wires 120 may be greater than 40 kHz, which is large enough to cover the operating frequency range of the cleaning system 100. This ensures that the transducers 110 can respond to different frequencies and generate broadband ultrasound waves that can improve the accuracy of the beam focusing and the resolution and contrast of the ultrasound image.

The impedance associated with the transducers 400 may be comprised between 250 and 350 Rayls, for example equal to 300 Rayls, which is close or slightly lower than the impedance of air, which is equal to 400 Rayls. This ensures that the transducers 110 can transfer energy efficiently and reduce the attenuation of ultrasound waves at the interface between the substrate 150 and the surface 101.

No restriction is attached to the capacitance of each transducer, which may be comprised between 5 and 15 nF, for example equal to 10 nF, which is compatible with a driving voltage of 100 V and a current of 10 mA for the electrical control signals delivered by the control device 103 to the transducers 110. This ensures that the transducers 110 are able to convert the electrical control signals into mechanical vibrations to generate the ultrasound waves, and vice versa when the transducers 110 receive the echoes of the ultrasound beam and generate echo signals transmitted to the control device 103.

No restriction is attached to the mechanical quality factor, also called Q factor, of the transducers 110, which may be less than 1000, which is low enough to avoid excessive heating and mechanical stress of the transducers 110. This ensures that the transducers 110 can operate stably and durably without being damaged and without damaging other components of an equipment comprising the surface 101.

Referring back to figure 1a, according to some embodiments, the cleaning system 100 may further comprise a camera 104, that is arranged for acquiring a two-dimensional picture comprising at least the surface 101, and preferably centered on the surface 101. The camera 104 may for example by a Red-Green-Blue, RGB, camera arranged for acquiring a colour picture representative of the surface 101. The camera 104 is arranged to transmit the acquired pictures to the control device 103. Based on the picture, the control device 103 may detect one or several positions or directions to be targeted by the cleaning system, and/or may detect a current weather conditions, and the series of control signals transmitted to the transducer array 102 can be adapted accordingly, as explained in what follows.

Alternatively, according to other embodiments, in particular when the cleaning system 100 does not comprise the camera 104, the cleaning system 100 may further comprise a reflector 105, that is arranged on a side of the surface 101, named second side, that is opposite to the first side on which the array 102 is arranged. The reflector 105 is arranged to reflect the ultrasound beam formed by the ultrasound waves generated by the transducers 110, to generate an echo of the ultrasound beam that is reflected towards the array 102. The transducers are arranged for receiving the echo of the ultrasound beam, at different positions, and to generate respective electrical echo signals that are transmitted, as feedback, to the control device 103.

Figure 2 shows a structure of the control device 103 according to some embodiments of the invention.

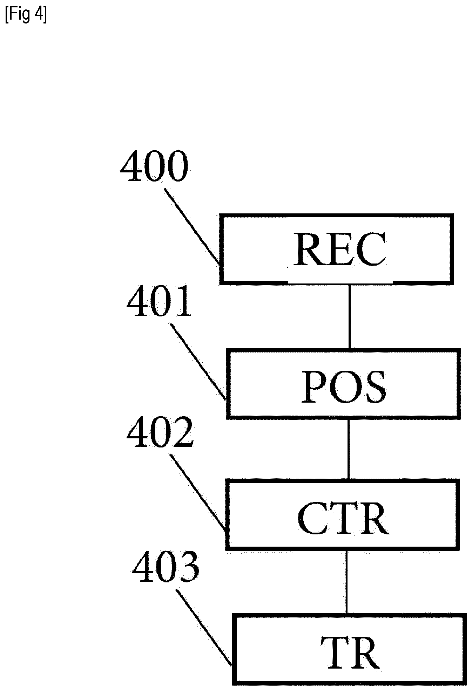

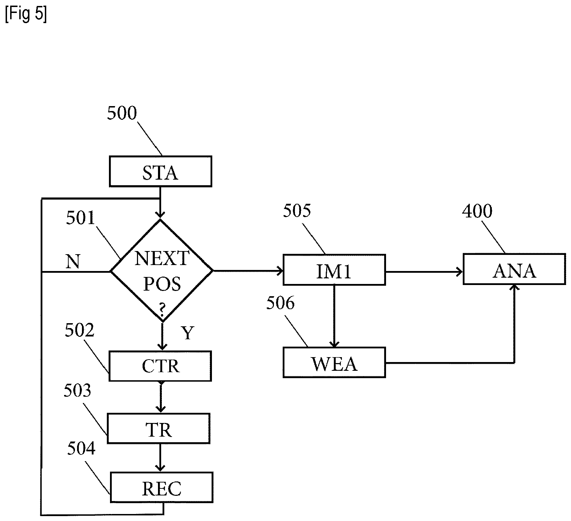

The control device 103 may comprise a control module 201, arranged to generate the control signals transmitted to the array 102 of transducers 110, so that they generate respective ultrasound waves that combine in an ultrasound beam focusing on a given target position or steering in a given direction, determined by the control module 201. As explained hereafter, the control module 201 is also configured to perform the steps of the method as described referring to figures 4 and 5. To this end, the control module 201 may be a processor may comprise one or multiple microprocessors, a Central Processing Unit, CPU, on a single Integrated Circuit, IC, or several IC chips.

The control device 103 further comprises a memory 202, which may be any non-transient, tangible form of memory. For example, it can comprise ROM, EEPROM and/or flash memory. The control unit 201 may be programmable and may be configured to execute instructions that are stored in its internal memory or instructions that are stored in the memory 202.

The control device 103 further comprises a transmission interface 205 arranged for transmitting a series of electrical control signals to the transducers 110, via the communication wires 120. The transmission interface 203 may comprise a digital to analog converter, so as to convert the digital control signals received from the control unit 201 into a series of electrical control signals transmitted to the transducers 110 via the communication wires 120. The digital control signals may indicate a magnitude, a delay value and a signal duration for each transducer 110, and the transmission interface 205 may further comprise delay units arranged for applying delays to the respective electrical control signals generated by the digital to analog converters, based on the delay values indicated in the digital control signals.

Upon reception of the series of electrical control signals, each 110 receiving one electrical control signal of the series, generates an individual ultrasound wave. The individual ultrasound waves of the transducers combine into an ultrasound beam. This technique is called beamforming, and is for example used in ultrasound image medical applications.

This allows, as explained hereafter, to target specific target positions or target directions of the surface 101, which improves the cleaning of the surface 101.

In addition, the obtained ultrasound beam may be used to determine an ultrasound image, by processing echo signals acquired by the transducers 110 receiving the echo of the ultrasound beam reflected by the reflector 105. To do this, each transducer 110 receives the echo of the ultrasound beam at a different position and generates an echo signal. The different echo signals are transmitted to the control device 103 via the communication wires 120, and the control device 103 can determine the ultrasound image based on the echo signals. Such an ultrasound image may be obtained using a beamforming technique, and preferably using synthetic aperture beamforming. Synthetic aperture beamforming allows a very fast generation of an ultrasound image based on the echo signals of an ultrasound beam.

The control device 103 may further comprise a first receiving interface 203 arranged for receiving a series of electrical echo signals from the respective transducers 110, via the communication wires 120, and convert them into digital echo signals transmitted to a synthesis module 206, described hereafter. To this end, the first receiving interface 203 may comprise an analog to digital converter arranged for converting the series of electrical echo signals into digital echo signals, that are transmitted to the synthesis module 206.

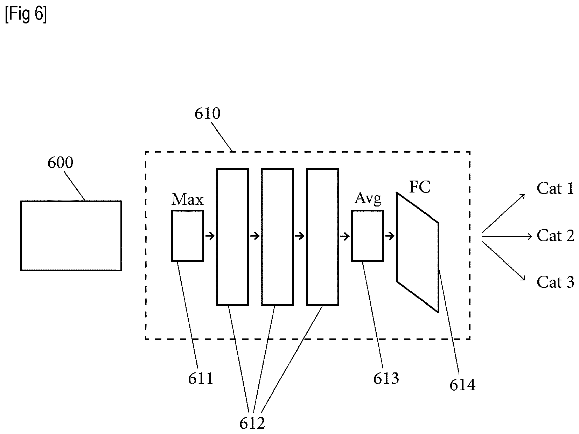

The synthesis module 206 is configured to determine a two-dimensional ultrasound image based on the digital echo signals received from the first receiving interface 203. As explained in what follows, the generated ultrasound image enables, according to some embodiments:
- the control module 201 to determine a target position or a target direction based on the generated ultrasound image. The control module 201 can then determine a series of control signals to generate an ultrasound beam that is focused on the target position or that is steered in the target direction. This allows to perform an efficient cleaning of the surface 101, by detecting the position of a body on the surface 101 and by focusing the ultrasound beam on the detected body. In addition, the calculation of an ultrasound image avoids the need to use a camera, such as the camera 104, to detect a body on the surface 101; and/or
- the control module 201 to determine weather conditions based on the generated ultrasound image. To this end, according to some embodiments, the control module 201 may apply a set of predefined rules to the generated ultrasound image to determine the weather conditions. The weather conditions may be a weather category among several predefined categories such as "rainy", "normal", "snowy", "dusty" or any other weather category. The predefined set of rules may be stored in the memory 202. Alternatively, the control module 201 is configured to apply a classification model trained by machine learning to the generated ultrasound image to determine a weather category. The classification model may be based on a linear classifier, a support vector machine, a decision tree or a random forest algorithm. For example, the classification model may be a neural network, such as a convolutional neural network for example, trained based on a training labeled dataset by supervised learning, such as explained in what follows, referring to figure 6. The classification model may be stored in the memory 202 of the control device 103. Based on the determined weather conditions (for example based on the determined weather category), the control module 201 may adapt parameters (duration, frequency, delays, magnitude, etc) of the series of control signals, to obtain optimized control signals that are transmitted to the transducers 110. This allows to improve the cleaning efficiency by taking into account the weather conditions, without the need to have an additional sensor such as the camera 104.

According to some embodiments, the control device 103 comprises the receiving interface 203 and the synthesis module 206 and is arranged to determine a target position or direction and/or weather conditions based on feedback data received by the transducers 110 (the echo signals), so as to determine the control signals to focus on the target position or target direction and/or optimized to take into account the weather conditions. In these embodiments, the cleaning system 100 may not comprise the camera 104 previously described.

In alternative embodiments, the control device 103 does not comprise the receiving interface 203, but comprises a second receiving interface 204 arranged for receiving a picture acquired by the camera 104. The picture received by the receiving interface 203 can be transmitted to the control module 201 that is arranged to analyze the received picture to:
- determine a target position and/or a target direction, for example by identifying a position of a body to be evacuated to clean the surface 101;
- determine weather conditions, such as a weather category as mentioned above, based on the received picture.

Alternatively, the second receiving interface 204 is arranged to receive data describing the target position and/or the target direction, and/or data described the weather conditions, that are determined by an entity that is external to the control device 103, for example that are determined by the camera 104.

In these alternative embodiments, the control module 201 is also configured to determine control signals based on the target position and/or the target direction, and/or optimized based on data described the weather conditions, to focus on the target position or target direction and/or to take into account the weather conditions.

Figure 3a show the array 102 of transducers 110 of a system 100 for cleaning the surface 101 according to some embodiments of the invention, in a first configuration.

In the first configuration, the array 102 is controlled by the control device 103 to generate an ultrasound beam that is focused on a first position 301 on the surface 101. The first position 301 is centered for illustrative purposes only, and for the sake of explaining how the beam is focused on the first position 301. The control device 103 may transmit, via the communication wires 120, a series of control signals to the respective transducers 110 so that the individual ultrasound waves generated by the transducers 110 combine into an ultrasound beam that is focusing on the first position 301, according to a beamforming technique. This allows to:
- target a specific position for cleaning purpose, and/or
- to scan different positions to receive echoes of several ultrasound beams targeting different positions, to obtain the ultrasound image by the synthesis module 206.

As shown on figure 3a, the control signal may be electrical pulses delayed by different delay values controlled by the control device 103. According to the beamforming technique, the control device 103 can also control the array 102 of transducers 110 to generate an ultrasound beam that is focused on a second position 302, different from the first position, and that is not centered on the surface 101. To this end, the control device 103 can modify the delay parameters of the electrical pulses transmitted to the transducers 110.

Figure 3b shows the array 102 of transducers 110 of a system 100 for cleaning the surface 101 according to some embodiments of the invention, in a second configuration.

In the second configuration, the array 102 is controlled by the control device 103 to generate a beam that is steered in a first direction 311. The control device 103 may transmit, via the communication wires 120, a series of control signals to the respective transducers 110 so that the individual ultrasound waves generated by the transducers 110 combine into an ultrasound beam that is steered in the first direction 311, according to a beamforming technique. This allows to:
- target a specific direction for cleaning purpose, and/or
- to scan different directions to receive echoes of several ultrasound beams targeting different directions, to obtain the ultrasound image by the synthesis module 206.

It is to be noted that, according to the beamforming technique, the control device 103 is able to:
- focus an ultrasound beam on a given point; or
- steer an ultrasound beam on a given direction; or
- focus an ultrasound beam on a given point and steer an ultrasound beam on a given direction. Therefore, the control device 103 is configured to perform both beams shown on figures 3a and 3b. In that case, scanning can be performed by varying the focused position and/or the direction of the several ultrasound beams, and receiving the echo signals.

Figure 4 is a diagram showing the steps of a method for cleaning a surface using an ultrasound beam, according to some embodiments of the invention.

The method can be implemented in the control module 201 of the control device 103 that has been previously described.

At step 400, the control module 201 may obtain:
- an ultrasound image generated by the synthesis module 206, and/or a weather category determined by the control module 201 based on the ultrasound image generated by the synthesis module 206, according to some embodiments of the invention; and/or
- a picture representative of the surface 101 acquired by the camera 104 and received via the second receiving interface 204, or data descriptive of weather conditions and/or of a position of a body detected on the surface, received via the second receiving interface 204, according to some alternative or complementary embodiments;

At step 401, the control module 101 determines a target position and/or a target direction on the surface 101. The target position/direction may be determined based on the data obtained at step 400: the target position may for example be the position of a body detected on the surface 101, based on the ultrasound image or based on the picture acquired by the camera 104.

At step 402, the control module 201 generates a series of control signals based on the determined target position or direction, according to the beamforming technique, and as previously explained. The parameters of the control signals of the series may also be optimized based on the data describing weather conditions, if received at step 400.

At step 403, the series of control signals determined at step 402 are transmitted to the array 102 of transducers 110 via the transmission interface 205.

Alternatively, several target positions/directions may be determined at step 401, and steps 402 and 403 are repeated for each of the several positions/directions target positions/directions determined at step 401.

It is to be noted that the control module 201 may determine the series of control signals based on additional information, and not only based on the target position or direction, and optionally the weather conditions. For example, the control module 201 may receive an item of information describing a type of body detected at the target position/in the target direction, among predefined types, such as "dirt", "snow", "debris" or other types. If receiving such an information describing a type of body detected at the target position/in the target direction, the parameters of the control signals of the series can also be determined based on the information describing the type of body.

The body can be a liquid body, such as a drop or a liquid film, which is a thin liquid sheet formed on the surface 101, the liquid film being continuous or discontinuous. The body can be watery, such as rain water or dew water.

Alternatively, the body can be a solid body, including ice, snow, frost, debris, or dust particles for example.

The body can be in contact with an upper face of the surface 101 on which the array of transducers 110 is mounted, or can be on the opposite face of the upper face. At least one the parameters of the control signals can be predefined for each of the body types, which enables to perform an efficient cleaning of the surface 101 for a broad scope of body types.

Figure 5 shows the preliminary steps of a method for cleaning a surface by generating an ultrasound beam, according to some embodiments of the invention.

The preliminary steps of figure 5 are describing the embodiments in which the control device 103 is configured to determine an ultrasound image by receiving echo signals from the array of transducers 110. As previously explained, these embodiments enable to avoid the use of the camera 104 to determine weather conditions and/or a body to be targeted on the surface 101.

The preliminary steps comprise a step 500, which initiates the scanning process of the surface 100. No restriction is attached to the initiation of the step 500, which can be triggered at each activation of the cleaning system 100 and/or at a given frequency when the cleaning system 100 is activated.

The initiation 500 also comprises determining a sequence of positions and/or directions to be targeted to perform the scanning and obtain the ultrasound image. The sequence of positions and/or directions comprises at least two positions or directions, and preferably more than ten, or even more than 100, positions and/or directions, so as to increase the resolution of the ultrasound image.

At step 501, the control module 201 determines whether all the positions and/or directions of the sequence determined at step 500 have been targeted/scanned, i.e. if steps 502 to 504 have been performed for all the positions and/or directions of the sequence.

If not, i.e. if there is at least one position or direction in the sequence that has not been targeted by implementing steps 502 to 504 to the at least on position/direction, the method goes to step 502. At step 502, the control module 201 generates a series of control signals based on the next position/direction of the sequence that has not been targeted. The series of controls signals, according to the beamforming techniques, enables to generate individual ultrasound waves of the transducers that combine into an ultrasound beam focused on the next position of the sequence or steered to the next direction of the sequence.

At step 503, the generated series of control signals is sent to the array 102 of transducers 110, via the transmission interface 205.

At step 504, echo signals, corresponding to the echo of the ultrasound beam generated based on the series of control signals transmitted at step 503, are received by the first receiving interface 203, and transmitted to the synthesis module 206.

If the control module 201 determines at step 501 that all the positions or directions of the sequence have been targeted, i.e. if steps 502 to 504 have been implemented for all the positions/directions of the sequence, then the scanning process is terminated and the method goes to step 505.

At step 505, the control module 201 may request the ultrasound image constructed by the synthesis module 206 based on the echo signals received for each scanned position/direction of the sequence.

The method then goes to step 400 previously described, as the control module 201 obtains the ultrasound image from the synthesis module 206 and may determine the position of a body to be evacuated on the surface 101.

Alternatively, or in complement, the control module 201 may determine, at step 505; weather conditions based on the ultrasound image. For example, as previously explained, the control module 201 may apply a classification model stored in the memory 202 to the ultrasound image to obtain a weather category. The method then goes to step 400 previously described, as the control module 201 obtains the weather condition based on the ultrasound image.

Figure 6 shows the structure of a classification model 610 for determining a weather category based on an ultrasound image, according to some embodiments of the invention.

The classification model 610 illustrated on figure 6 is a convolutional neural network, CNN, arranged for receiving an ultrasound image 600 as input.

The CNN 610 may comprise:
- a first pooling layer 611, such as a max pooling layer, which allows to downsize the input ultrasound image 600, by subsampling for example;
- one or several convolutional layers 612, the number of layers determining the depth of the CNN 610 and depending on the complexity of the classification model, wherein each convolutional layer 612 is arranged to generate a map of features based on the map of features of the previous layer;
- a second pooling layer 613, such as an average pooling layer, which allows obtaining a downsampled feature map by calculating average values for patches of the feature map received from the last convolutional layer 612;
- a fully connected layer 614, which is arranged to determine a weather category based on the downsampled feature map, and among a predetermined number of weather categories, such as the weather categories previously listed. The fully connected layer 614 may implement a classifier, such as a linear classifier for example.

The parameters of the layers of the CNN 610 can be trained by supervised learning based on a labeled dataset. The labeled dataset may comprise ultrasound images labelled with respective weather conditions.

The labeled dataset can be split in training data and test data. The parameters of the CNN 610 are trained in a training phase with the training data, then tested on the test data to evaluate the accuracy of the model. If the accuracy is above a prefixed threshold, the training phase may be terminated and the CNN 610 may be stored, with the optimized parameters, in the memory 202 of the control device 103, to be used at step 505 as previously described.

The structure of the CNN 610 is described for illustrative purposes, and may vary: the number of convolutional layers may vary, and the CNN 610 may comprise several consecutive fully connected layers 614.

The example embodiments are described in sufficient detail to enable those of ordinary skill in the art to embody and implement the systems and processes herein described. It is important to understand that embodiments can be provided in many alternate forms and should not be construed as limited to the examples set forth herein.

## Claims

1. A method for cleaning a surface (101) on which an array (102) of piezoelectric transducers (110) is mounted, each transducer being arranged to receive a control signal and to convert it into an individual ultrasound wave transported on the surface, the method comprising the following steps:
- determining (401) a target position (301; 302) and/or a target direction (311) on the surface;
- generating (402) a series of control signals based on the determined target position and/or target direction, so that individual ultrasound waves generated by the array of piezoelectric transducers based on the series of control signals, combine into an ultrasound beam that is focused on the target position and/or that is steered in the target direction;
- transmitting (403) the series of control signals to the array of transducers.

2. The method according to claim 1, wherein the target position (301; 302) and/or target direction (311) is determined based on a picture obtained from a camera (104) arranged to acquire pictures representative of the surface (101).

3. The method according to claim 1, further comprising, before determining the target position (301; 302) and/or a target direction (311), the steps of:
- determining (500) a sequence of positions and/or directions of the surface (101);
- for each position and/or direction of the sequence, generating (502) a series of control signals based on the position and/or direction of the sequence, so that individual ultrasound waves generated by the array of piezoelectric transducers based on the series of control signals, combine into an ultrasound beam that is focused on the and/or that is steered in the direction of the sequence, transmitting (503) the series of control signals and receiving (504) a series of echo signals from the array of transducers;
- generating (505) an ultrasound image based on the several series of echo signals received for the positions and/or directions of the sequence;
wherein the target position (301; 302) and/or target direction (311) is determined based on the generated ultrasound image.

4. The method according to one of the preceding claims, further comprising determining (400) a weather condition, and wherein parameters of the series of control signals are determined (402) based on the target position (301; 302) and/or a target direction (311), and based on the weather condition.

5. The method according to claim 2 and 4, wherein the weather condition is determined (400) based on the picture obtained from the camera (104).

6. The method according to claims 3 and 4, wherein the weather condition is determined (506; 400) based on the ultrasound image.

7. The method according to claim 6, wherein the weather condition is a weather category determined (506) among a plurality of predefined weather category by applying a classification model.

8. The method according to claim 7, wherein the classification model is a convolutional neural network (610).

9. A computer program comprising instructions arranged for implementing the method according to one of the preceding claims, when said instructions are executed by a processor.

10. A control device (103) of a system (100) for cleaning a surface (101) on which an array (102) of piezoelectric transducers (110) is mounted, each transducer being arranged to receive a control signal and to convert it into an individual ultrasound wave transported on the surface, the control device comprising a control module (201) with a processor configured for:
- determining a target position and/or a target direction on the surface;
- generating a series of control signals based on the determined target position and/or target direction, so that individual ultrasound waves generated by the array of piezoelectric transducers based on the series of control signals, combine into an ultrasound beam that is focused on the target position and/or that is steered in the target direction;
wherein the control device further comprises a transmission interface (205) arranged for transmitting the series of control signals to the array of transducers.

11. A system (100) for cleaning a surface (101), comprising a control device (103) according to claim 10 and an array (102) of piezoelectric transducers (110), each transducer being arranged to receive a control signal and to convert it into an individual ultrasound wave transported on the surface.
